# EUROPEAN PATENT SPECIFICATION

(11) **EP 4 038 113 B1**
(45) Date of publication and mention of the grant of the patent: **01.11.2023**
(21) Application number: 20824453.3
(22) Date of filing: 10.09.2020
(51) Int. Cl.: C08F 8/00, C08F 8/04, C08F 8/30, C08F 20/36, C08J 3/28, C08F 120/36, C08F 220/28, C08F 220/36, C08F 290/06, C08F 299/02, C08F 293/00

(54) **DECARBOXYLATION OF N-OXYPHTHALIMIDE-BASED POLYMERS**
DECARBOXYLIERUNG VON POLYMEREN AUF N-OXYPHTHALIMID-BASIS
DÉCARBOXYLATION DE POLYMÈRES À BASE DE N-OXYPHTALIMIDE

(30) Priority: 30.09.2019 EP 19401040
(43) Date of publication of application: 10.08.2022
(73) Proprietor: Karlsruher Institut für Technologie (KIT), 76131 Karlsruhe (DE)
(72) Inventor: THEATO, Patrick, 76297 Stutensee (DE); FRECH, Stefan, 76131 Karlsruhe (DE)
(86) International application number: PCT/EP2020/025403
(87) International publication number: WO 2021/063538

(56) References cited:
- ROBERT CHAPMAN ET AL: "Controlled poly(olefin)s via decarboxylation of poly(acrylic acid)", POLYMER CHEMISTRY, vol. 8, no. 43, 11 October 2017 (2017-10-11), pages 6636-6643, XP055676302, ISSN: 1759-9954, DOI: 10.1039/C7PY01466J cited in the application
- TIAN QIN ET AL: "Nickel-Catalyzed Barton Decarboxylation and Giese Reactions: A Practical Take on Classic Transforms", ANGEWANDTE CHEMIE, INTERNATIONAL EDITION, vol. 56, no. 1, 16 December 2016 (2016-12-16), pages 260-265, XP055676283, DE ISSN: 1433-7851, DOI: 10.1002/anie.201609662 cited in the application
- CHAO ZHENG ET AL: "Ru-Photoredox-Catalyzed Decarboxylative Oxygenation of Aliphatic Carboxylic Acids through N -(acyloxy)phthalimide", ORGANIC LETTERS, vol. 20, no. 16, 2 August 2018 (2018-08-02), pages 4824-4827, XP055676284, ISSN: 1523-7060, DOI: 10.1021/acs.orglett.8b01885 cited in the application
- A. F. SHAABAN ET AL: "Poly-N-acryloyloxy-and -N-methacryloyloxyphthalimides as activated drug-binding matrices", ACTA POLYMERICA, vol. 39, no. 3, March 1988 (1988-03), pages 145-148, XP055676280, cited in the application

## Description

The present invention relates to the decarboxylation of N-oxyphthalimide-based polymers.

The synthesis of functional polymers with precisely defined molecular mass, composition, and architecture is a significant challenge. Functional polymers may be prepared by polymerization of appropriately protected monomers, although the additional deprotection step may not necessarily proceed to completion and may also affect the structural integrity of the polymer backbone. Direct polymerization of functional monomers clearly is a more attractive strategy. The traditional living anionic and cationic polymerization techniques, however, only offer very limited possibilities for the direct polymerization of monomers containing functional groups. Such functional groups may either completely prevent controlled polymerization or may participate in side reactions that can lead to loss of control over the polymerization reaction.

This situation has improved with the development of controlled radical polymerization techniques as well as with advances in catalytic polymerization, which have resulted in polymerization reactions with a higher functional group tolerance.

Post-polymerization modification is an attractive approach for the synthesis of functional polymers that overcomes problems related to a limited functional group tolerance of the mentioned polymerization strategies.

The synthesis of functional polymers through post-polymerization modification is based on the polymerization of monomers with functional groups that are inert towards the polymerization conditions but which can be quantitatively converted into a broad range of other functional groups in a subsequent reaction step. The success of this method is based on the excellent conversions achievable under mild conditions, the excellent functional group tolerance, and the orthogonality of the post-polymerization modification reactions.

Post-polymerization modification facilitates diversification in a single polymeric backbone, essential for engineering functional materials which are otherwise not possible by direct polymerization.

Nowadays, various methods have been developed to further modify polymers. Popular methods are based on activated esters, thiol reactions, 1,3-dipolar cycloadditions, cross-coupling reactions, or Michael-type additions (Gauthier et al., Angew. Chem. Int. Ed. 2009, 48, 48-58).

The nucleophilic substitution of polymeric active esters has become the most common form of post-polymerization modification since the introduction of these polymers by the groups of Ferruti (Ferruti et al., Polymer 1972, 13, 462) and Ringsdorf (Ringsdorf et al., Angew. Chem. 1972, 84, 1189; Angew. Chem. Int. Ed. Engl. 1972, 11, 1103).

The reaction of active ester polymers with amines is probably the most frequently used post-polymerization modification strategy. Amines are most often used for the post-polymerization modification of active ester polymers since they can react selectively without the need for protection groups even in the presence of weaker nucleophiles, such as alcohols. The most common monomers used to prepare sidechain *N*-hydroxysuccinimide ester polymers are *N*-hydroxysuccinimide acrylate and *N-*hydroxysuccinimide methacrylate. The respective reactive polymers poly(*N*-hydroxysuccinimide acrylate) and poly(*N-*hydroxysuccinimide methacrylate) can react with amines under very mild reaction conditions, yielding functionalized polyacrylamide or polymethacrylamide derivatives.

A drawback of *N*-hydroxysuccinimide acrylate and *N-*hydroxysuccinimide methacrylate is that they are only soluble in DMF and DMSO and the post-polymerization modification of these active ester polymers can be accompanied by side reactions, such as succinimide ring-opening or the formation of *N*-substituted glutarimide groups. The solubility of active-ester-based polymer precursors can be improved by copolymerization or by replacing the *N*-hydroxysuccinimide ester group with other activating groups, such as 2,4,5-trichlorophenol ester, endo-*N*-hydroxy-5-norbornene-2,3-dicarboxyimide, or pentafluorophenol ester groups, as shown by Théato and co-workers (Théato et al., Macromolecules 2004, 37, 5475; Théato et al., Eur. Polym. J. 2005, 41, 1569).

A new and innovative field is the usage of polymeric phthalimide-based esters for post-polymerization modifications. Shaaban et *al.* (Shaaban et al., Acta Polymerica 1988, 39, 3, 145-148) describe the exchange of the phthalimide group of poly-N-acryloyloxy- and -N-methacryloyloxyphthalimides using amines and hydroxylated compounds. Berlinova et *al.* (Berlinova et al., Journal of Polymer Science: Part A Polymer Chemistry 1995, 33, 1751-1758) describe the use of phthalimidoacrylate prepolymers for the synthesis of graft copolymers with poly(ethylene oxide) side chains by activated ester substitution of poly(phthalimidoacrylate) or poly(phthalimidoacrylate-co-styrene) with amine-terminated poly(ethylene glycol) monomethyl ether.

Using the Barton decarboxylation, it is possible to remove carboxylic acid moieties from alkyl groups and replace them with other functional groups (Barton et al., J. Chem. Soc., Chem. Commun. 1983, 939-941). The Barton decarboxylation is a radical reaction in which a carboxylic acid is converted to a thiohydroxamate ester. The product is then heated in the presence of a radical initiator and tributyltin hydride as hydrogen donor to afford the decarboxylated product.

Metal-catalyzed decarboxylation reactions of redox-active phthalimide-based esters have been used for the modification of organic small molecules. Qin et *al.* (Qin et al., Angew. Chem. Int. Ed. 2017, 56 (1), 260-265) found *N*-oxyphthalimide based small molecule redox-active esters to be convenient starting materials for simple thermally-induced nickel-catalyzed radical formation and subsequent radical trapping with a hydrogen atom source such as phenylsilane, or an electron deficient olefin. Zheng et *al.* (Zheng et al., Org. Lett. 2018, 20, 4824-4827) describe the metal-catalyzed decarboxylative aminoxylation of *N-*oxyphthalimide small molecule active esters with (4-hydroxy-TEMPO (4-hydroxy-2,2,6,6-tetramethylpiperidine-*N*-oxyl) in the presence of a ruthenium photoredox catalyst and a Hantzsch ester.

Monomers bearing an activated ester group can be polymerized under various polymerization techniques, like Free Radical Polymerization or Controlled Radical Polymerization, such as Reversible Addition-Fragmentation Chain-Transfer Polymerization (RAFT). Combining the functionalization of polymers via polymeric activated esters with these polymerization techniques generate possibilities to realize highly functionalized polymer architectures (Théato et al., Journal of Polymer Science: Part A: Polymer Chemistry, 2008, Vol. 46, 6677-6687).

Free Radical Polymerization is a method of polymerization by which a polymer forms by the successive addition of free-radical building blocks. In the free radical formation usually separate radical-generating initiators are involved. Following its generation, the initiating free radical adds (non-radical) monomer units, thereby growing the polymer chain. Free Radical Polymerization is a key synthesis route for obtaining a wide variety of different polymers and material composites. The relatively non-specific nature of free-radical chemical interactions makes this one of the most versatile forms of polymerization available and allows facile reactions of polymeric free-radical chain ends and other chemicals or substrates (Rudin et al., The Elements of Polymer Science & Engineering (Third Edition), 2013, 341-389).

Controlled Radical Polymerization methods enable the straightforward synthesis of polymeric materials from a wide range of different monomers featuring narrow molar mass distributions as well as low dispersity and allow for a good control over the polymerization itself. Reversible Addition-Fragmentation Chain-Transfer Polymerization makes use of a chain transfer agent in the form of a thiocarbonylthio compound (or similar) to afford control over the generated molecular mass and polydispersity during Free Radical Polymerization (Matyjaszewski et al., Materials Today 2005, 8, 26-33; G. Moad et al., Chem. Asian J. 2013, 8, 1634-1644).

Polyolefins are by far the largest class of synthetic polymers made and used today. There are several reasons for this, such as low cost of production, light weight, and high chemical resistance. A wide range of mechanical properties can be provided through the use of copolymerization, blending, and additives to make products from elastomers to thermoplastics to high strength fibers (Lohse et al., Applied Polymer Science: 21st Century, 2000, chapter: Polyolefins).

The European production of polyethlyene totals about 15 million tons, resulting in a third of the total polymer production in Europe
https://www.plasticseurope.org/application/files/6315/4510/965 8/Plastics_the_ facts_2018_AF_web.pdf).

Polyolefins are most commonly synthesized by coordination polymerization using a metal based catalyst such as the Ziegler-Natta catalyst, by cationic polymerization at low temperature, or by radical polymerization at high pressure (Merna et al., Chem. Rev. 2016, 116, 3, 771-785). A variety of mechanisms for controlling the length and end group chemistry of polyolefins have been developed over the past decades, including coordination polymerization (Zhang et al., J. Am. Chem. Soc. 2008, 130, 442-443), and catalyzed chain growth polymerization (German et al., Angew. Chem., Int. Ed., 2013, 52, 3438-3441), both of which yield polymers with very low dispersity. Although indirect, an attractive alternative is to polymerize symmetrically functionalized dienes by acyclic diene metathesis (ADMET) polycondensation (Lehman et al., Macromolecules 2007, 40, 2643-2656) and then hydrogenate the remaining double bonds. Dommanget *et al.* describe the controlled radical polymerization of ethylene using RAFT in the presence of xanthates as controlling agents under relative mild conditions (70 °C, < 200 bars)(Dommanget et al., Angew. Chem. Int. Ed. 2014, 53, 6683 - 6686).

Polyolefins containing block copolymers are typically prepared in a multistep fashion, from two distinct polymerization mechanisms, as most techniques are not compatible with both polar and non-polar vinyl monomers (Franssen et al., Chem. Soc. Rev. 2013, 42, 5809-5832). In the case of olefin-acrylate copolymers, the olefin block is typically prepared first by a catalytic coordination polymerization and then transformed into a suitable initiator for addition of the second block by Controlled Radical Polymerization (Zhao et al., J. Mater. Chem., 2012, 22, 5737-5745).

Chapman *et al.* describe the synthesis of controlled polyolefins via decarboxylation of poly(acrylic acid) activated with *N-*hydroxytetrachlorophthalimide (Chapman et al., Polym. Chem. 2017, 8, 6636-6643). According to Chapman *et al. N*-acryloyloxy-tetrachlorophthalimide was polymerized by RAFT and well-defined polyolefins with alkyl side chains were generated by decarboxylation and C-C bond formation using a dialkylzinc reagent, nickel(II) chloride ethylene glycol dimethyl ether complex (NiCl₂ glyme) and 4,4'-di-*tert*-butyl-bipyridyl (bbbpy).

The objective technical problem was to provide a polyolefin, polyolefin copolymer, polyolefin block copolymer or a functionalized polyolefin, functionalized polyolefin copolymer or functionalized polyolefin block copolymer via radical decarboxylation of an *N*-oxyphthalimide-based polyolefin-precursor polymer, copolymer or block copolymer and via trapping the resulting radicals.

The objective technical problem is solved by the embodiments characterized in independent claim 1. Preferred embodiments can be found in the dependent claims.

According to the invention the preparation of a polyolefin, polyolefin copolymer or polyolefin block copolymer or a functionalized polyolefin, functionalized polyolefin copolymer or functionalized polyolefin block copolymer is realized by a thermally or photo-induced radical decarboxylation reaction using a redox transition-metal catalyst and a reducing agent and by trapping the resulting radicals with a radical donor.

The method according to the invention is suitable for radical based post-polymerization modifications. The removal of the N-oxyphthalimide side group on the one hand gives the opportunity to develop a new and innovative method for the synthesis of well-defined polyolefin-like structures and on the other hand allows for the introduction of new functional groups to a polymeric system.

As provided herein *N*-oxyphthalimide-based polyolefin-precursor polymers are polymers that are built from monomers comprising an *N*-oxyphthalimide moiety and being suitable to be transformed to a polyolefin backbone after polymerization and post-polymerization modification. In the case of *N*-oxyphthalimide-based polyolefin-precursor copolymers or block copolymers, the monomer comprising an *N*-oxyphthalimide moiety is copolymerized with at least one different monomer unit.

The redox transition-metal catalyst is a transition-metal complex (including one or more ligands) which can under influence of heat or light perform a single-electron transfer (SET) to an organic species in order to form a radical localized at the organic species. The transition-metal catalyst is oxidized during the SET and has to be reduced afterwards in accordance to restart the catalytic cycle.

The reducing agent according to the invention is a metal atom, an inorganic compound or an organic compound that is capable of building a redox pair with the transition-metal catalyst.

The radical donor is a molecular species capable of independent existence that contains an unpaired electron in an atomic orbital and donates an electron to or accept an electron from other molecules, therefore behaving as oxidant or reductant. According to the invention the radical donor can be a hydrogen-radical donor or an organic radical donor.

In a preferred embodiment the *N*-oxyphthalimide-based polyolefin-precursor polymer, copolymer or block copolymer is poly[*N-*(acryloyloxy)phthalimide] or poly[*N*-(methacryloyloxy)-phthalimide], a poly[*N*-(acryloyloxy)phthalimide]- or poly[*N-*(methacryloyloxy)phthalimide]-copolymer, or a poly[*N*-(acryloyloxy)phthalimide]- or poly[*N*-(methacryloyloxy)phthalimide]-block copolymer.

In one embodiment an *N*-oxyphthalimide-based polyolefin-precursor polymer, copolymer or block copolymer is decarboxylated thermally with a redox transition-metal catalyst, a reducing agent and a radical donor.

According to the invention the term thermally means that the decarboxylation is initiated by the reduction of the transition-metal catalyst under supply of activation energy in the form of heat.

In a preferred embodiment the redox transition-metal catalyst is a Ni(II) catalyst.

In a more preferred embodiment the Ni(II) catalyst is (4,4'-di-*tert*-butyl-2,2'-dipyridyl)nickel ([Ni(bbbpy)]II).

The thermally initiated decarboxylation reaction is performed at elevated temperatures, e.g. at a temperature in the range of 35 °C - 100 °C.

In a preferred embodiment the thermally initiated decarboxylation reaction is performed at 40 °C - 60 °C.

In a preferred embodiment the radical donor in the thermally induced decarboxylation reaction under redox transition-metal catalysis is phenylsilane, 4-hydroxy-TEMPO (4-hydroxy-2,2,6,6-tetramethylpiperidine-*N*-oxyl) or a 4-hydroxy-TEMPO derivative, such as 2,2,6,6-tetramethylpiperidine-*N*-oxyl, 4-methoxy-2,2,6,6-tetramethylpiperidine-*N*-oxyl, 4-carboxy-2,2,6,6-tetramethylpiperidine-*N*-oxyl, 4-methoxycarbonyl-2,2,6,6-tetramethylpiperidine-*N*-oxyl or 4-amino-2,2,6,6-tetramethylpiperidine-N-oxyl.

According to the invention phenylsilane serves as a hydrogen-radical donor. Hydrogen transfer agents in radical reactions need a low metal-H bond dissociation energy. Phenylsilane can substitute for the toxic tri-n-butyltin hydride reagent, which generates difficult to separate nonpolar byproducts such as bis(tributyltin) oxide). The dissociation energy of the Sn-H bond in Bu₃SnH is 78 kcal/mol (Laarhoven et al., Acc. Chem. Res. 1999, 32, 342), the dissociation energy of the Si-H bond in phenylsilane is 88.2 kcal/mol (Walsh et al., Acc. Chem. Res. 1981, 148, 246-252). In addition to very low toxicity, further advantages of phenylsilane are the good handleability and the high boiling point.

4-Hydroxy-TEMPO and its derivatives are stable radicals and suitable as organic radical traps due to the easy handling of the compounds (Barriga et al., Synlett. 2001 (4), 563; Marshall et al., Org. Biomol. Chem. 2011, 9, 4936-4947).

The optionally substituted TEMPO (2,2,6,6-tetramethylpiperidin-1-yl)oxyl) moiety attached to the polymer increases the solubility of the polymer in organic solvents in comparison to polymers with pure polyolefin segments. TEMPO derivatives can be used for further functionalization reactions like esterification, amide formation or etherification.

Suitable reducing agents for the thermally initiated decarboxylation reaction are base metals like Zn(0), alkali metal borohydrides, such as sodium borohydride or potassium borohydride, alkali metal aluminium hydrides, such as lithium aluminium hydride or sodium aluminium hydride, diisobutylaluminium hydride or hydrazine.

In a preferred embodiment the reducing agent is Zn(0).

In an especially preferred embodiment the thermally-induced transition-metal-catalyzed decarboxylation of phthalimide-based activated esters is performed with poly[*N*-(acryloyloxy)-phthalimide] or poly[*N*-(methacryloyloxy)phthalimide], a poly[*N-*(acryloyloxy)phthalimide]- or poly[*N*-(methacryloyloxy)-phthalimide]-copolymer, or a poly[*N*-(acryloyloxy)phthalimide]- or poly[*N*-(methacryloyloxy)phthalimide]-block copolymer using ([Ni(bbbpy)]II) as redox transition-metal catalyst, zinc as reducing agent and phenylsilane, 4-hydroxy-TEMPO or a 4-hydroxy-TEMPO derivative as radical compound.

Without being restricted by a particular theory, the following mechanism is assumed for the thermally-induced decarboxylation reaction according to the invention:
The reaction mechanism is based on a SET nickel-based catalytic cycle. The cycle starts with the reduction of a Ni(II)-species to Ni(0) by a reducing agent such as zinc, followed by a SET from the reduced nickel species to the phthalimide side group of the polymer, copolymer or block copolymer. The unpaired electron is stabilized and delocalized over the activated ester group.

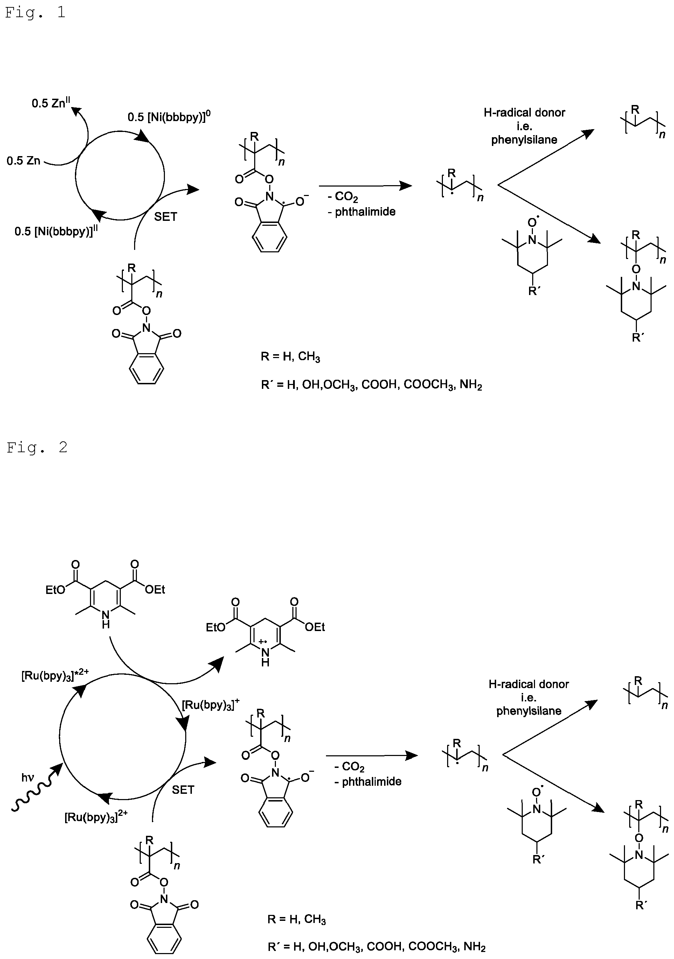

Once the electron is located at the ester functionality, CO₂ is formed and released from the molecule. Besides CO₂, the phthalimide group is also cleaved from the molecule and a secondary radical is formed which is located at the polymer backbone. For the formation of polyolefins or polyolefin (block) copolymers, the phthalimide group must be replaced by a hydrogen atom using a hydrogen-radical donor, like phenylsilane (Qin et al., Angew. Chem. Int. Ed. 2017, 56 (1), 260-265). For the formation of further functionalized polymers or (block) copolymers, the phthalimide group must be replaced by organic radical compounds, like 4-hydroxy-TEMPO or a 4-hydroxy-TEMPO derivative (cf. figure 1).

Figure 1 describes the decarboxylation mechanism of the nickel-catalysis based redox cycle, starting with the reduction of the nickel(II) species [Ni(bbbpy)]II (bbbpy = 4,4'-di-*tert*-butyl-bipyridyl) by zinc as reducing agent and followed by a SET from the nickel(0) spezies [Ni(bbbpy)]0 to the phthalimide side group of the polyolefin-precursor polymer leading to the release of CO₂ and phthalimide species forming a radical at the backbone which can further react with a hydrogen-radical donor, like phenylsilane, resulting in polyolefins or with an organic radical donor, like 4-hydroxy-TEMPO or a 4-hydroxy-TEMPO derivative, resulting in functionalized polyolefins. In figure 1 R is H or CH₃ and R' is H, OH, OCH₃, COOH, COOCH₃ or NH₂.

According to the invention the synthesis of N-(acryloyloxy)phthalimide or N-(methacryloyloxy)phthalimide, respectively, is performed with N-hydroxyphthalimide and acrylic acid or methacrylic acid as educts and 4-dimethylaminopyridine and 1-ethyl-3-(3-dimethylamino-propyl)carbodiimide hydrochloride (EDC·HCl) as reagents (Steglich et al., Angew. Chem., Band 90, 1978, 556-557).

According to the invention poly[*N*-(acryloyloxy)phthalimide] or poly[*N*-(methacryloyloxy)phthalimide] are prepared by Free Radical Polymerization of *N*-(acryloyloxy)phthalimide or *N-*(methacryloyloxy)phthalimide, respectively, using azobisisobutyronitrile (AIBN) as radical-generating initiator. By varying the ratio of AIBN to monomer used for the polymerization the molar mass of poly[*N-*(acryloyloxy)phthalimide] or poly[*N*-(methacryloyloxy)-phthalimide] can be adjusted.

Alternatively poly[*N*-(acryloyloxy)phthalimide] or poly[*N-*(methacryloyloxy)phthalimide] are prepared from *N-*(acryloyloxy)phthalimide or *N*-(methacryloyloxy)phthalimide by RAFT polymerization using a radical-generating initiator, like azobisisobutyronitrile (AIBN), and a common chain transfer agent, like a dithioester, dithiocarbamate, xanthate or a trithiocarbonate, such as 4-cyano-4-[(dodecylsulfanylthio-carbonyl)sulfanyl]pentanoic acid or 2-(dodecylthiocarbono-thioylthio)-2-methylpropionic acid (DDMAT).

It was observed that polymers with pure polyolefin segments obtained after cleavage of the N-oxyphthalimide group were highly insoluble in common organic solvents and only low amounts of the product could be dissolved for further analysis. However, it is in the realm of possibility that the decarboxylation proceeds almost quantitative and only the non-quantitative decarboxylated chains were soluble.

The formation of poly[*N*-(acryloyloxy)phthalimide]-copolymers or -block copolymers or poly[*N*-(methacryloyloxy)phthalimide]-copolymers or -block copolymers, *e.g.* with oligo(ethylene glycol)methyl ether acrylates increases the solubility of the respective copolymers in organic solvents and thus enables the decarboxylation reaction according to the invention to be quantitative.

According to the invention a statistic (meaning statistically distributed monomers in the chain) poly[N-(acryloyloxy)phthalimide]-copolymer is synthesized with oligo(ethylene glycol) methyl ether acrylate (OEGMeA) as comonomer. The copolymerization is conducted with a ratio of 1:3 of N-(acryloyloxy)phthalimide to oligo(ethylene glycol) methyl ether acrylate by Free Radical Polymerization using azobisisobutyronitrile (AIBN) as radical-generating initiator.

In addition, poly[*N*-(methacryloyloxy)phthalimide]-block-poly[oligo(ethylene glycol) methyl ether methacrylate] is synthesized by Free Radical Polymerization with a ratio of 1:1 of *N*-(methacryloyloxy)phthalimide to oligo(ethylene glycol) methyl ether acrylate using azobisisobutyronitrile (AIBN) as radical-generating initiator.

In another embodiment an *N*-oxyphthalimide-based polyolefin-precursor polymer, copolymer or block copolymer is decarboxylated photo-induced with a redox transition-metal catalyst, a reducing agent and a radical donor.

According to the invention photo-induced means that the decarboxylation reaction is initiated by converting the transition- metal catalyst in an excited state by absorption of light.

In a preferred embodiment the redox transition-metal catalyst is a Ru(II) catalyst.

In a more preferred embodiment the Ru(II) catalyst is tris(bipyridine)ruthenium(II) chloride.

The photo-induced decarboxylation reaction is performed under irradiation with blue light, according to a wavelength range of 420 - 490 nm. Suitable light sources are light emitting diodes, ultraviolet-lamps or mercury vapor lamps.

In a preferred embodiment the photo-induced decarboxylation reaction is conducted with an *N*-oxyphthalimide-based polyolefin-precursor polymer, copolymer or block copolymer under irradiation with blue light with a wavelength maximum of 440 - 450 nm.

In a preferred embodiment the radical donor in the photo-induced decarboxylation reaction under redox transition-metal catalysis is phenylsilane, 4-hydroxy-TEMPO or a 4-hydroxy-TEMPO derivative.

In a preferred embodiment the reducing agent in the photo-induced decarboxylation reaction is a Hantzsch ester.

Hantzsch ester is the term used to describe compounds like 3,5-diethoxycarbonyl-1,4-dihydro-2,6-dimethylpyridine and derivatives (Wang et al., Org. Biomol. Chem. 2019, 17, 6936-6951).

In an especially preferred embodiment the photoredox-induced transition-metal-catalyzed decarboxylation of phthalimide-based activated esters is performed with poly[*N*-(acryloyloxy)-phthalimide] or poly[*N*-(methacryloyloxy)phthalimide], a poly[N-(acryloyloxy)phthalimide]- or poly[*N*-(methacryloyloxy)-phthalimide]-copolymer, or a poly[*N*-(acryloyloxy)phthalimide]- or poly[*N*-(methacryloyloxy)phthalimide]-block copolymer using tris(bipyridine)ruthenium(II) chloride as redox transition-metal catalyst, a Hantzsch ester as reducing agent and phenylsilane, 4-hydroxy-TEMPO or a 4-hydroxy-TEMPO derivative as radical donors.

Without being restricted by a particular theory, the following mechanism is assumed for the photo-induced decarboxylation reaction according to the invention:
The decarboxylation is based on a radical mechanism. Tris(bipyridine)ruthenium(II) chloride hexahydrate is used as redox active compound in the decarboxylation, whereas a Hantzsch ester is oxidized during the decarboxylation. The (RuII) metal catalyst is excited to the photoexcited state (Ru*II) with blue light. The Hantzsch ester reduces the excited (Ru*II) catalyst to (RuI) followed by a SET from (RuI) to the phthalimide side group of the polymer or (block) copolymer oxidizing the Rucatalyst to (RuII) . The cycle is reinitiated by the light-induced transition of (RuII) to (Ru*II). Analogously to the nickel-based catalytic system, the transfer of electrons to the phthalimide side group is followed by release of carbon dioxide and phthalimide species and the formation of a secondary radical located at the polymer backbone. Hydrogen-radical donors like phenylsilane can be used to react with the radical to form polyolefins or polyolefin (block) copolymers, other radical compounds like 4-hydroxy-TEMPO or 4-hydroxy-TEMPO derivatives can be employed to form different kinds of functionalized polymers or (block) copolymers (cf. figure 2).

Figure 2 describes the decarboxylation mechanism of the ruthenium-catalysis based redox reaction starting with the light induced transition of tris(bipyridine)ruthenium(II) to tris(bipyridine)ruthenium(*II) followed by the reduction of the Ru-species by a Hantzsch ester and a SET to the phthalimide side group of the polymer leading to the release of carbon dioxide and the phthalimide species with formation of a secondary radical at the polymer backbone, which can further react with a hydrogen-radical donor, like phenylsilane, resulting in polyolefins or with an organic radical donor, like 4-hydroxy-TEMPO or 4-hydroxy-TEMPO derivatives, resulting in functionalized polyolefins. In figure 2 R is H or CH₃ and R' is H, OH, OCH₃, COOH, COOCH₃ or NH₂.

The invention describes a new efficient method for polyolefin and polyolefin (block) copolymer production. An olefin, like ethylene or propylene, is no longer used directly as a monomer starting material, but the starting material is now an active ester monomer, such as an activated acrylic or methacrylic acid ester. This allows synthetic access to many modern synthesis methods for polyolefins, such as controlled radical polymerization methods (in addition to RAFT, ATRP (Atom Transfer Radical Polymerization), NMP (Nitroxide-Mediated Radical Polymerization) and others should also be mentioned).

Combined with the post-polymerization method according to the invention, namely that *N*-oxyphthalimide-based polyolefin-precursor polymers, copolymers or block copolymers are decarboxylated generating polymer backbone radicals that can be trapped by radical donors, the synthetic access to a variety of architectures, such as functionalized (block) copolymers, star polymers, polymer networks, etc., is possible.

This opens up completely new fields of application for polyolefin polymers or (block) copolymers, like the use as solid state electrolytes in batteries, the use as functional membranes such as stretchable films or the use as compatibilizing agents, e.g. in immiscible polymer blends.

### Example 1:

### Synthesis of Poly[N-(acryloyloxy)phthalimide] by Free Radical Polymerization

*N*-(Acryloyloxy) phthalimide (0.50 g, 2.30 mmol. 1.0 eq.) and AIBN (Polymer 1: 3.0 mg, 0.018 mmol, 0.008 eq.)/(Polymer 2: 9.1 mg, 0.055 mmol, 0.024 eq.) were dissolved in 2.5 ml of anhydrous DMF in a round bottom flask. The flask was sealed with a septum and the solution was deoxygenated with an argon flow for 20 minutes. Afterwards, the flask was placed in a preheated oil bath for 1.5 hours at 70 °C and the polymer was precipitated in cold diethyl ether, centrifuged, washed three times with cold diethyl ether, and dried under reduced pressure at 40 °C.

¹H NMR (400 MHz, DCM-d₂): *δ* / ppm = 7.92 -7.40 (m, 4H, C_{aromatic}H, 3.79 - 3.30 (m, 1H, CHCH₂), 2.69 - 1.88 (m. 2H, CHCH₂).

FT-IR (ATR): *v*/cm⁻¹ = 2930 (C-H of backbone), 1811 (C=O of ester), 1784 (C=O of phthalimide), 1670 (C=C aromatic), 1467 (C=C aromatic), 1357 (C-N), 1055 (C-O of ester), 833 (N-O of phthalimide).
Molar mass of polymer 1 according to SEC = 8400 g mol⁻¹, *Ð* (dispersity) = 2.45, ~ 37 monomer units per chain, ratio of AIBN to monomer = 0.008:1
Molar mass of polymer 2 according to SEC = 2500 g mol⁻¹, Ð (dispersity) = 1.22, ~ 11 monomer units per chain, ratio of AIBN to monomer = 0.024:1

### Example 2:

### Synthesis of Poly[N-(acryloyloxy)phthalimide] by RAFT Polymerization

*N*-(Acryloyloxy)phthalimide (0.25 g, 1.08 mmol, 12.0 eq.), AIBN (1.77 mg , 0.01 mmol , 0.1 eq , and 2-(dodecylthiocarbonothioylthio)-2-methylpropionic acid (31.7 mg, 0.09 mmol, 1.0 eq.) were dissolved in 1.0 ml of anhydrous DMF in a round bottom flask. The flask was sealed with a septum and the solution was deoxygenated with an argon flow for 20 minutes. Afterwards, the flask was placed in a preheated oil bath for 6.5 hours at 80 °C and the polymer was precipitated in cold diethyl ether, centrifuged, washed with diethyl ether, and dried under reduced pressure at 40 °C.

¹H NMR (400 MHz, DCM-d₂): *δ* / ppm = 7.92 - 7.46 (m, 4H, C_{aromatic}H), 3.80 -3.27 (m, 1H, CHCH₂), 2.68 -1.88 (m, 2H, CHCH₂).

Molar mass according to SEC = 3600 g mol⁻¹, *Ð* = 1.22, ~ 15 monomer units per chain.

### Example 3:

### Synthesis of Poly[N-(methacryloyloxy)phthalimide] by RAFT Polymerization

*N*-(Methacryloyloxy)phthalimide (0.5 g, 2.11 mmol, 18.1 eq.), AIBN (1.91 mg, 0.01 mmol, 0.1 eq.), and 4-cyano-4-[(dodecylsulfanylthiocarbonyl)sulfanyl]pentanoic acid (46.9 mg, 0.12 mmol, 1.0 eq.) were dissolved in 1.0 ml of anhydrous DMF in a round bottom flask. The flask was sealed with a septum and the solution was deoxygenated with an argon flow for 20 minutes. Afterwards, the flask was placed in a preheated oil bath for 3.5 hours at 70 °C and the polymer was precipitated in cold diethyl ether, centrifuged, washed with diethyl ether, and dried under reduced pressure at 40 °C.

¹H NMR (400 MHz, DMSO-d₅) : *δ* / ppm = 8.17 - 7.54 (m, 4H, C_{aromatic}H), 2.06 - 1.13 (m, 5H, C_{backbone}H₂CH₃).
Molar mass according to SEC = 8800 g mol⁻¹, *Ð* = 2.03

### Example 4:

### Synthesis of Poly[N-(acryloyloxy)phthalimide]-copoly[oligo-(ethylene glycol) methyl ether acrylate] by Free Radical Polymerization

Oligo(ethylene glycol) methyl ether acrylate (1.00 g, 2.10 mmol, 3.0 eq.), *N*-(acryloyloxy)phthalimide (0.15 g, 0.69 mmol, 1.0 eq.) and AIBN (3.40 mg, 0.013 mmol, 0.008 eq.) were dissolved in 1 ml of DMF in a round bottom flask. Afterwards, the flask was sealed with as septum and the solution was deoxygenated with an argon flow for 20 minutes. After deoxygenating, the flask was placed in a preheated oil bath for 1.5 hours at 80 °C and the polymer was precipitated in cold diethyl ether, centrifuged, washed three times with cold diethyl ether, and dried at room temperature. The ratio of *N*-(acryloyloxy)phthalimide to oligo(ethylene glycol) methyl ether acrylate was found to be 1:3.

¹H NMR (400 MHz, CDCl₃): *δ* / ppm = 7.82 (m, 4 H, C_{aromatic}H), 4.19 (m, 2H, COOCH₂), 3.79 - 3.46 (m, 32H, (OCH₂CH₂O)₈), 3.36 (s, 3H, CH₂OCH₃), 2.64 - 1.15 (m, 3H, C_{backbone}H).
Molar mass according to SEC = 28300 g mol⁻¹, *Ð* = 2.17

### Example 5:

### Synthesis of Poly[N-(methacryloyloxy)phthalimide]-block-poly[oligo(ethylene glycol) methyl ether methacrylate] by Free Radical Polymerization

Poly[*N*-(methacryloyloxy)phthalimide] (0.15 g, 0.02 mmol, 1.0 eq.), AIBN (0.28 mg, 0.002 mmol, 0.1 eq.), and oligo(ethylene glycol) methyl ether methacrylate (852 mg, 1.7 mmol, 1.0 eq.) were dissolved in 1.5 ml of anhydrous DMF in a round bottom flask. The flask was sealed with a septum and the solution was deoxygenated with an argon flow for 20 minutes. Afterwards, the flask was placed in a preheated oil bath for 18 hours at 70 °C and the polymer was precipitated in cold diethyl ether, centrifuged, washed with diethyl ether, and dried under reduced pressure at 40 °C.

¹H NMR (400 MHz, CDCl₃): *δ* / ppm = 7.92 - 7.46 (m, 4H, C_{aromatic}H), 4.05 (s, 2H), 3.61 (m, 34H, (OCH₂CH₂)₈), 2.00 (s, 3H, CH₃), 0.91 (m, 2H, C_{backbone}H).
Molar mass Poly[N-(methacryloyloxy)phthalimide]-block: *M*ₙ, _{phthalimide} = 8800 g mol⁻¹, *Ð*_{phthalimide} = 2.03;
Molar mass total polymer: *M*_{n, block} = 47.000 g mol⁻¹, *Ð*_{block} = 1.84

### Example 6:

### Synthesis of Poly[N-(acryloyloxy)phthalimide]-block-poly[oligo(ethylene glycol) methyl ether acrylate] by RAFT Polymerization

*N*-(Acryloyloxy) phthalimide (200 mg, 0.92 mmol, 30 eq.), AIBN (0.5 mg, 0.003 mmol, 0.1 eq.), and S-benzyl *S*'-propyltrithiocarbonate (BPTT) (7.45 mg, 0.03 mmol, 1.0 eq.) were dissolved in 0.25 ml of DMF in a pear shaped flask. The flask was sealed with a septum, the solution was deoxygenated with an argon flow for 20 minutes and the flask was placed in a preheated oil bath for 5 hours at 80 °C. Deinhibited oligo(ethylene glycol) methyl ether acrylate (83.0 mg, 0.17 mmol, 5.5 eq.) and AIBN (0.5 mg, 0.003 mmol, 0.1 eq.) were dissolved in 0.1 ml of DMF in a pear-shaped flask and the solution was deoxygenated with a nitrogen flow for 20 minutes. After 5 hours, the mixture was added to the polymerization flask and the reaction mixture was stirred overnight. The polymer was precipitated in cold diethyl ether, centrifuged, washed with diethyl ether, and dried at room temperature.

¹H NMR (400 MHz, DCM-d₂): δ / ppm = 8.13 (m, 4H, C_{aromatic}H), 4.44 (s, 2H, COOCH₂), 3.88 (m, 32H, (OCH₂CH₂)₈), 3.64 (s, 3H, CH₃), 2.97 - 2.42 (m, 1H, COOC_{backbone}H), 2.12 (m, 2H, C_{backbone}H).
Molar mass Poly [*N*-(acryloyloxy)phthalimide]-block: *M*_{n, phthalimide} = 5000 g mol⁻¹, *Ð*_{phthalimide} = 1.6,
   DP(degree of polymerization)_{phthalimide} = 20;
Molar mass total polymer: *M*_{n, block} = 5400 g mol⁻¹, *Ð*_{block} = 1.6, DP(degree of polymerization)_{OEGMeA(poly[OEGMeA]-block)} = 1

### Example 7:

### Nickel-catalyzed Decarboxylation of Poly[N-(acryloyloxy)-phthalimide] with Phenylsilane

A Schlenk tube was charged with poly[*N*-(acryloyloxy)-phthalimide)] (100 mg, 0.01 mmol, 1.0 eq.), zinc (15.6 mg, 0.24 mmol, 0.5 eq. per ester group), and a stir bar. The Schlenk tube was then evacuated and backfilled with argon three times. 0.1 ml of anhydrous THF and 0.05 ml of isopropyl alcohol were deoxygenated in a vial with an argon flow for 20 minutes and added to the Schlenk tube. A solution of NiCl₂ · 6 H₂O (9.72 mg, 0.04 mmol, 0.1 eq. per ester group) and 4,4'-di-*tert*-butyl-2,2'-dipyridyl (23.2 mg, 0.08 mmol, 0.2 eq. per ester group) in 0.5 ml of anhydrous DMF was deoxygenated in a vial with an argon flow for 20 minutes. Simultaneously, phenylsilane (50.7 mg, 0.47 mmol, 1.5 eq. per ester group) in 0.5 ml of anhydrous DMF was also deoxygenated with an argon flow in a vial and the nickel catalyst and phenylsilane solution were added in quick succession. A balloon filled with argon was added on the Schlenk tube which was placed in a preheated oil bath at 40 °C and the solution was stirred for 48 hours. The Schlenk tube was then removed from the oil bath and allowed to cool to ambient temperature. The polymer was precipitated in cold diethyl ether, centrifuged, washed three times with diethyl ether, and dried at room temperature.

At least 90 % of the phthalimide side groups were removed as determined by ¹H-NMR and ATR-FT-IR.

¹H NMR (400 MHz, DMF-d₇): *δ* / ppm = 7.77 - 6.64 (m, 4H, C_{aromatic}H), 3.68 - 3.09 (m, 1H, CHCOON), 1.99 - 0.38 (m, 2H, C_{backbone}H₂).

### Example 8:

### Nickel-catalyzed Decarboxylation of Poly[N-(methacryloyloxy)-phthalimide] with Phenylsilane

A Schlenk tube was charged with poly[N-(methacryloyloxy)-phthalimide)] (100 mg, 0.002 mmol, 1 .0 eq.), zinc (15.6 mg, 0.24 mmol, 0.5 eq. per ester group), and a stir bar. The Schlenk tube was then evacuated and backfilled with argon three times.

0.1 ml of anhydrous THF and 0.05 ml of i-PrOH were deoxygenated in a vial with an argon flow for 20 minutes and added to the Schlenk tube. A solution of NiCl₂ · 6 H₂O (9.72 mg, 0.04 mmol, 0.1 eq. per ester group) and 4,4'-di-*tert*-butyl-2,2'-dipyridyl (23.2 mg, 0.08 mmol, 0.2 eq. per ester group) in 0.5 ml of anhydrous DMF was deoxygenated in a vial with an argon flow for 20 minutes. Simultaneously, phenylsilane (50.7 mg, 0.47 mmol, 1.5 eq. per ester group) in 0.5 ml of anhydrous DMF was also deoxygenated with an argon flow in a vial and the nickel catalyst and phenylsilane solution were added in quick succession. A balloon filled with argon was added on the Schlenk tube which was placed in a preheated oil bath at 40 °C and the solution was stirred for 48 hours. The Schlenk tube was then removed from the oil bath and allowed to cool to ambient temperature. The polymer was precipitated in cold diethyl ether, centrifuged, washed three times with diethyl ether, and dried at room temperature.

The yield of the decarboxylation reaction could not be determined quantitatively due to the poor solubility of the reaction product.

¹H NMR (400 MHz, DMF-d₇): δ / ppm = 7.83 - 6.61 (m, 4H, C_{aromatic}H), 1.92 - 0.42 (m, 5H, CH₃ / C_{backbone}H₂).

### Example 9:

### Nickel-catalyzed Decarboxylation of Poly[N-(acryloyloxy)-phthalimide] with 4-hydroxy-TEMPO

A Schlenk tube was charged with poly[*N*-(acryloyloxy)-phthalimide)] (100 mg, 0.01 mmol, 1.0 eq.), zinc (15.6 mg, 0.24 mmol, 0.5 eq. per ester group), and a stir bar. The Schlenk tube was then evacuated and backfilled with argon three times. A solution of NiCl₂ · 6 H₂O (9.72 mg, 0.04 mmol, 0.1 eq. per ester group) and 4,4'-di-*tert*-butyl-2,2'-dipyridyl (23.2 mg, 0.08 mmol, 0.2 eq. per ester group) in 0.5 ml of anhydrous DMF was deoxygenated in a vial with an argon flow for 20 minutes. Simultaneously, 4-hydroxy-TEMPO (0.11 g, 0.61 mmol, 1.5 eq. per ester group) in 0.5 ml of anhydrous DMF was also deoxygenated with an argon flow in a vial and the nickel catalyst and 4-hydroxy-TEMPO solution were added in quick succession. A balloon filled with argon was added on the Schlenk tube which was placed in a preheated oil bath at 40 °C and the solution was stirred for 48 hours. The Schlenk tube was then removed from the oil bath and allowed to cool to ambient temperature. The polymer was precipitated in cold diethyl ether, centrifuged, washed with diethyl ether, and dried at room temperature.

The phthalimide side groups could be removed quantitatively as determined by ¹H-NMR and ATR-FT-IR.

¹H NMR (400 MHz, DMSO-d₆) : *δ* / ppm = 4.75 - 4.31 (m, 1H, NOCHCH₂), 4.04 - 3.66 (m, 1H, CHOH), 3.48 - 3.07 (m, 1H, CHOH), 2.05 - 0.40 (m, 18H, NC(CH₃)₄(CH₂)₂/NOCHCH₂).

### Example 10:

### Nickel-catalyzed Decarboxylation of Poly[N-(acryloyloxy)-phthalimide]-co-poly[oligo(ethylene glycol) methyl ether acrylate] with Phenylsilane

A Schlenk tube was charged with poly[*N*-(acryloyloxy)-phthalimide)]-co-poly[oligo(ethylene glycol) methyl ether acrylate] (100 mg, 0.08 mmol, 1.0 eq.), zinc (15.0 mg, 0.23 mmol, 0.5 eq. per ester group), and a stir bar. The Schlenk tube was then evacuated and backfilled with argon three times. 0.1 ml of anhydrous THF and 0.05 ml of isopropyl alcohol were deoxygenated with an argon flow in a vial and added to the Schlenk tube. A solution of NiCl₂ · 6 H₂O (11.0 mg, 0.05 mmol, 0.1 eq. per ester group) and 4,4'-di-*tert*-butyl-2,2'-dipyridyl (24.8 mg, 0.09 mmol, 0.2 eq. per ester group) in 0.5 ml of anhydrous DMF was deoxygenated in a vial with an argon flow for 20 minutes. Simultaneously, phenylsilane (74.8 mg, 0.69 mmol, 1.5 eq. per ester group) in 0.5 ml of anhydrous DMF was also deoxygenated in a vial and the nickel catalyst and phenylsilane solution were added in quick succession. A balloon filled with argon was added on the Schlenk tube which was placed in a preheated oil bath at 40 °C and the solution was stirred for 48 hours. The Schlenk tube was then removed from the oil bath and allowed to cool to ambient temperature. The polymer was precipitated in cold diethyl ether, centrifuged, washed three times with diethyl ether and dried at room temperature.

The phthalimide side groups could be removed quantitatively as determined by ¹H-NMR.

¹H NMR (400 MHz, CDCl₃): *δ* / ppm = 4.18 (s, 2H, COOCH₂), 3.93 - 3.49 (m, 32H, (OCH₂CH₂O)₈), 3.37 (s, 3H, (OCH₂CH₂O)₈CH₃), 2.3 (m, 1H, CHCOO), 2.09 - 0.51 (m, C_{backbone}H₂).
Molar mass = 22300 g mol⁻¹; *Ð* = 2.46

### Example 11:

### Nickel-catalyzed Decarboxylation of poly[N-(methacryloyloxy)-phthalimide]-block-poly[oligo(ethylene glycol) methyl ether methacrylate] with Phenylsilane

A Schlenk tube was charged with poly[*N-*(methacryloyloxy)phthalimide]-*block*-poly[oligo(ethylene glycol) methyl ether methacrylate] (500 mg, 0.01 mmol, 1.0 eq.), zinc (15.0 mg, 0.23 mmol, 0.5 eq. per ester group), and a stir bar. The Schlenk tube was then evacuated and backfilled with argon three times. 0.1 ml of anhydrous THF and 0.05 ml of i-PrOH were deoxygenated in a vial with an argon flow for 20 minutes and added to the Schlenk tube. A solution of NiCl₂ · 6 H₂O (11.0 mg, 0.05 mmol, 0.1 eq. per ester group) and 4,4'-di-*tert*-butyl-2,2'-dipyridyl (24.8 mg, 0.09 mmol, 0.2 eq. per ester group) in 1.5 ml of anhydrous DMF was deoxygenated in a vial with an argon flow for 20 minutes. Simultaneously, phenylsilane (74.8 mg, 0.69 mmol, 1.5 eq. per ester group) in 1.5 ml of anhydrous DMF was also deoxygenated with an argon flow in a vial and the nickel catalyst and phenylsilane solution were added in quick succession. A balloon filled with argon was added on the Schlenk tube which was placed in a preheated oil bath at 40 °C and the solution was stirred for 48 hours. The Schlenk tube was then removed from the oil bath and allowed to cool to ambient temperature. The polymer was precipitated in cold diethyl ether, centrifuged, washed three times with diethyl ether, and dried at room temperature.

The phthalimide side groups could be removed quantitatively as determined by ¹H-NMR.

¹H NMR (400 MHz, Acetone-d₆): *δ* / ppm = 4.16 (s, 2H, COOCH₂), 3.93 - 3.45 (m, 34H, CH₂O(CH₂CH₂O)₈), 3.32 (s, 3H, OCH₃), 2.80 (s, 2H, C_{backbone}CH₂), 2.05 - 1.75 (s, 3H, C_{backbone}CH₃) 1.29 - 0.84 (m, C_{backbone}CH₂CH₃).

### Example 12:

### Nickel-catalyzed Decarboxylation of poly[N-(acryloyloxy)-phthalimide]-block-poly[oligo(ethylene glycol) methyl ether acrylate] with Phenylsilane

A Schlenk tube was charged with zinc (15.6 mg, 0.24 mmol, 0.5 eq. per ester group), and a stir bar. The Schlenk tube was then evacuated and backfilled with argon three times. A solution of NiCl₂ · 6 H₂O (9.72 mg, 0.04 mmol, 0.1 eq. per ester group) and 4,4'-di*-tert*-butyl-2,2'-dipyridyl (23.2 mg, 0.08 mmol, 0.2 eq. per ester group) in 0.5 ml of anhydrous DMF was deoxygenated in a vial with a nitrogen flow for 20 minutes. Simultaneously, phenylsilane (50.7 mg, 0.47 mmol, 1.5 eq. per ester group) in 0.5 ml of anhydrous DMF and poly[*N*-(acryloyloxy)phthalimide]-*block*-poly(OEGMeA) (100 mg, 0.02 mmol, 1.0 eq.) in a mixture of 0.5 ml of anhydrous DMF, 0.1 ml of anhydrous THF and 0.05 ml of isopropanol in a separate vial were also deoxygenated with a nitrogen flow and the nickel catalyst and phenylsilane solution were added in quick succession. A balloon filled with nitrogen was added on the Schlenk tube which was placed in a preheated oil bath at 40 °C and the solution was stirred for 30 minutes. The polymer was precipitated in cold diethyl ether, centrifuged, washed three times with diethyl ether, purified by dialysis in methanol and dried at room temperature.

¹H NMR (400 MHz, DCM-d₂): δ / ppm = 7.27 - 6.94 (m, 5H, CH_{BPTT}), 4.19 - 3.98 (s, 2H, COOCH₂), 3.73 - 3.32 (s, 3H, CH₃), 3.25 (s, OH), 2.50 - 1.48 (m, 3H, C_{backbone}H), 1.48 - 0.86 (s, 2H, CH₂, _{PE}).

### Example 13:

### Photoredox-catalyzed Decarboxylation of Poly[N-(acryloyloxy)-phthalimide] with 4-hydroxy-TEMPO

Poly[*N*-(acryloyloxy)phthalimide] (100 mg, 0.012 mmol, 1.0 eq.), Ru(bpy)₃Cl₂· 6 H₂O (6.1 mg, 0.008 mmol, 0.02 eq. per ester group), and Hantzsch ester (103 mg, 0.41 mmol, 1.0 eq. per ester group) were placed in a dry Schlenk tube equipped with a stirring bar. The tube was evacuated and backfilled with argon three times. Simultaneously, 4-hydroxy-TEMPO (105 mg, 0.61 mmol, 1.5 eq. per ester group) in 2.5 ml of anhydrous DMF was deoxygenated with an argon flow for 20 minutes and added via a gas-tight syringe under argon atmosphere afterwards. The reaction mixture was stirred under the irradiation of three 3 W blue LEDs (distance app. 1.5 cm from the light source, wavelength maximum 440 - 450 nm) at room temperature for 24 hours, precipitated in cold diethyl ether, centrifuged, washed with diethyl ether, and dried under reduced pressure at 40 °C.

The phthalimide side groups could be removed quantitatively as determined by ¹H-NMR.

¹H NMR (400 MHz, DMSO-d₆) : *δ* / ppm = 4.65 - 4.01 (m, 1H, NOCHCH₂), 3.72 (m, 1H, CHOH), 3.34 (m, 1H, CHOH), 1.98 - 1.55 (m, 4H, HOCH(CH₂)₂), 1.53 - 0.62 (m, 14H, ONe (CH₃)₄/C_{backbone}H₂).

### Example 14:

### Photoredox-catalyzed Decarboxylation of poly[N-(acryloyloxy)phthalimide]-block-poly[oligo(ethylene glycol) methyl ether acrylate]

Ru(bpy)₃Cl₂ · 6 H₂O (8.9 mg, 0.01 mmol, 0.02 eq. per ester group), Hantzsch ester (142 mg, 0.6 mmol, 1.0 eq. per ester group) and poly[*N*-(acryloyloxy)phthalimide]-*block-*poly(OEGMeA) (130 mg, 0.024 mmol, 1.0 eq.) were placed in a dry Schlenk tube equipped with a stirring bar. The tube was evacuated and backfilled with nitrogen three times. Simultaneously, phenylsilane (97.0 mg, 0.9 mmol, 1.5 eq. per ester group) in 1.0 ml of anhydrous DMF was deoxygenated with a nitrogen flow for 20 minutes and added via a gas-tight syringe under argon atmosphere afterwards. The reaction mixture was stirred under the irradiation of three 3 W blue LEDs (distance app. 1.5 cm from the light source, wavelength maximum 440 - 450 nm) at room temperature for 30 minutes, precipitated in cold diethyl ether, centrifuged, washed with diethyl ether, and purified by dialysis in methanol.

¹H NMR (400 MHz, DCM-d₂): *δ* / ppm = 4.17 (s, 2H, COOCH₂), 3.58 (m, 32H, (OCH₂CH₂)₈), 3.32 (s, 3H, CH₃), 2.95 - 2.21 (m, 3H, C_{backbone}H), 1.25 (s, 2H, CH₂, _{PE}).
Molar mass *M*_{n, block} = 1100 g mol⁻¹

## Claims

1. A process for the preparation of a polyolefin, polyolefin copolymer or polyolefin block copolymer or a functionalized polyolefin, functionalized polyolefin copolymer or functionalized polyolefin block copolymer, wherein an *N-*oxyphthalimide-based polyolefin-precursor polymer, copolymer or block copolymer is decarboxylated in a radical reaction using a redox transition metal catalyst and a reducing agent and wherein the polymer backbone radicals formed in the decarboxylation reaction are trapped by a radical donor.

2. A process according to claim 1,
wherein the redox transition-metal catalyst is a Ni(II) catalyst.

3. A process according to claim 2,
wherein the Ni(II) catalyst is (4,4'-di-tert-butyl-2,2'-dipyridyl)-nickel ([Ni(bbbpy)]II).

4. A process according to the preceding claims,
wherein the decarboxylation reaction is performed within a temperature range of 40 °C - 60 °C.

5. A process according to the preceding claims,
wherein the reducing agent is a base metal, an alkali metal borohydride, an alkali metal aluminium hydride, diisobutylaluminium hydride or hydrazine.

6. A process according to claim 5,
wherein the reducing agent is Zn(0).

7. A process according to claim 1,
wherein the redox transition-metal catalyst is a Ru(II) catalyst.

8. A process according to claim 7,
wherein the redox transition-metal catalyst is tris(bipyridine)ruthenium(II) chloride.

9. A process according to claim 1,
wherein the decarboxylation reaction is performed under irradiation with blue light, according to a wavelength range of 420 - 490 nm.

10. A process according to claim 9,
wherein the decarboxylation reaction is performed under irradiation with blue light with a wavelength maximum of 440 - 450 nm.

11. A process according to claim 1,
wherein the reducing agent is a Hantzsch ester.

12. A process according to the preceding claims,
wherein the radical donor is phenylsilane, 4-hydroxy-2,2,6,6-tetramethylpiperidine-*N*-oxyl (4-hydroxy-TEMPO), 2,2,6,6-tetramethylpiperidine-*N*-oxyl, 4-methoxy-2,2,6,6-tetramethylpiperidine-*N*-oxyl, 4-carboxy-2,2,6,6-tetramethyl-piperidine-N-oxyl, 4-methoxycarbonyl-2,2,6,6-tetramethyl-piperidine-N-oxyl or 4-amino-2,2,6,6-tetramethylpiperidine-N-oxyl.

13. A process according to the preceding claims,
wherein the *N*-oxyphthalimide-based polyolefin-precursor polymer, copolymer or block copolymer comprises poly[N-(acryloyloxy)phthalimide] or poly[*N*-(methacryloyloxy)-phthalimide].

## Patentansprüche

1. Verfahren zur Herstellung eines Polyolefins, Polyolefin-Copolymers oder Polyolefin-Blockcopolymers oder eines funktionalisierten Polyolefins, funktionalisierten Polyolefin-Copolymers oder funktionalisierten Polyolefin-Blockcopolymers, wobei ein Polyolefin-Vorläuferpolymer, -Copolymer oder - Blockcopolymer auf N-Oxyphtalimid-Basis in einer Radikalreaktion unter Verwendung eines Redox-Übergangsmetallkatalysators und eines Reduktionsmittels decarboxyliert wird und wobei die in der Decarboxylierungsreaktion gebildeten Polymerrückgratradikale durch einen Radikal-Donor eingefangen werden.

2. Verfahren nach Anspruch 1, wobei der Redox-Übergangsmetallkatalysator ein Ni(II)-Katalysator ist.

3. Verfahren nach Anspruch 2, wobei der Ni(II)-Katalysator (4,4'-Di-tert-butyl-2,2'-dipyridyl)-Nickel ([Ni(bbbpy)]II) ist.

4. Verfahren nach einem der vorhergehenden Ansprüche, wobei die Decarboxylierungs-reaktion in einem Temperaturbereich von 40 °C bis 60 °C durchgeführt wird.

5. Verfahren nach einem der vorhergehenden Ansprüche, wobei das Reduktionsmittel ein unedles Metall, ein Alkalimetallborhydrid, ein Alkalimetallaluminiumhydrid, Diisobutyl-aluminiumhydrid oder Hydrazin ist.

6. Verfahren nach Anspruch 5, wobei das Reduktionsmittel Zn(0) ist.

7. Verfahren nach Anspruch 1, wobei der Redox-Übergangsmetallkatalysator ein Ru(II)-Katalysator ist.

8. Verfahren nach Anspruch 7, wobei der Redox-Übergangsmetall-Katalysator Tris(bipyridin)ruthenium(II)chlorid ist.

9. Verfahren nach Anspruch 1, wobei die Decarboxylierungsreaktion unter Bestrahlung mit blauem Licht in einem Wellenlängenbereich von 420 - 490 nm durchgeführt wird.

10. Verfahren nach Anspruch 9, wobei die Decarboxylierungsreaktion unter Bestrahlung mit blauem Licht mit einem Wellenlängenmaximum von 440 - 450 nm durchgeführt wird.

11. Verfahren nach Anspruch 1, wobei das Reduktionsmittel ein Hantzsch-Ester ist.

12. Verfahren nach einem der vorhergehenden Ansprüche, worin der Radikal-Donor Phenylsilan, 4-Hydroxy-2,2,6,6-tetramethylpiperidin-N-oxyl (4-Hydroxy-TEMPO), 2,2,6,6-Tetramethylpiperidin-N-oxyl, 4-Methoxy-2,2,6,6-tetramethylpiperidin-N-Oxyl, 4-Carboxy-2,2,6,6-tetramethylpiperidin-N-Oxyl, 4-Methoxycarbonyl-2,2,6,6-tetramethylpiperidin-N-oxyl oder 4-Amino-2,2,6,6-tetramethylpiperidin-N-oxyl ist.

13. Verfahren nach den vorhergehenden Ansprüchen, wobei das Polyolefin-Vorläuferpolymer, -Copolymer oder -Blockcopolymer auf N-Oxyphthalimidbasis Poly[N-(Acryloyloxy)phthalimid] oder Poly[N-(Methacryloyloxy)phthalimid]umfasst.

## Revendications

1. Procédé de préparation d'une polyoléfine, d'un polyoléfine copolymère ou d'un copolymère à blocs polyoléfine ou d'une polyoléfine fonctionnalisée, d'un polyoléfine copolymère fonctionnalisé ou d'un copolymère à blocs polyoléfine fonctionnalisé, dans lequel un polymère, un copolymère ou un copolymère à blocs précurseur de polyoléfine à base de N-oxyphtalimide est décarboxylé dans une réaction radicalaire à l'aide d'un catalyseur redox de métal de transition et d'un agent réducteur et dans lequel les radicaux du squelette du polymère formés dans la réaction de décarboxylation sont piégés par un donneur de radicaux.

2. Procédé selon la revendication 1, dans lequel le catalyseur redox à métaux de transition est un catalyseur Ni(II).

3. Procédé selon la revendication 2, dans lequel le catalyseur Ni(II) est le (4,4'-di-tert-butyl-2,2'-dipyridyl)-nickel ([Ni(bbbpy)]II).

4. Procédé selon l'une des revendications précédentes, dans lequel la réaction de décarboxylation est effectuée à une température comprise entre 40 °C et 60 °C.

5. Procédé selon l'une des revendications précédentes, dans lequel l'agent réducteur est un métal de base, un borohydrure de métal alcalin, un hydrure d'aluminium de métal alcalin, un hydrure de diisobutylaluminium ou de l'hydrazine.

6. Procédé selon la revendication 5, dans lequel l'agent réducteur est Zn(0).

7. Procédé selon la revendication 1, dans lequel le catalyseur redox à métaux de transition est un catalyseur Ru(II).

8. Procédé selon la revendication 7, dans lequel le catalyseur redox à métaux de transition est le chlorure de tris(bipyridine)ruthénium(II).

9. Procédé selon la revendication 1, dans lequel la réaction de décarboxylation est effectuée sous irradiation de lumière bleue, selon un domaine de longueurs d'onde de 420 - 490 nm.

10. Procédé selon la revendication 9, dans lequel la réaction de décarboxylation est effectuée sous irradiation par une lumière bleue dont la longueur d'onde maximale est comprise entre 440 et 450 nm.

11. Procédé selon la revendication 1, dans lequel l'agent réducteur est un ester de Hantzsch.

12. Procédé selon l'une des revendications précédentes, dans lequel le donneur de radicaux est le phénylsilane, le 4-hydroxy-2,2,6,6- tétraméthylpipéridine-N-oxyl (4-hydroxy-TEMPO), le 2,2,6,6-tétraméthylpipéridine-N-oxyl, le 4-méthoxy-2,2,6,6-tétraméthylpipéridine-N-oxyl, le 4-carboxy-2,2,6,6-tétraméthylpipéridine-N-oxyl, le 4-méthoxycarbonyl-2,2,6,6-tétraméthylpipéridine-N-oxyl ou le 4- amino-2,2,6,6-tétraméthylpipéridine-N-oxyl.

13. Procédé selon l'une des revendications précédentes, dans lequel le polymère, le copolymère ou le copolymère à blocs précurseur de polyoléfine à base de N-oxyphtalimide comprend le poly[N-(acryloyloxy)-phtalimide] ou le poly[N-(méthacryloyloxy)-phtalimide].
